# EUROPEAN PATENT SPECIFICATION

(11) **EP 1 875 808 B1**
(45) Date of publication and mention of the grant of the patent: **11.06.2008**
(21) Application number: 06014087.8
(22) Date of filing: 07.07.2006
(51) Int. Cl.: A23G 9/22, A23G 9/04, A23G 9/12

(54) **Stirring device for dispenser of frozen beverages**
Rühreinrichtung für Spender von gefrorenen Getränken
Dispositif d'agitation pour distributeur de boissons glacées

(43) Date of publication of application: 09.01.2008
(73) Proprietor: Huang, Mao-Hsin, Tucheng City T'ai pei (TW)
(72) Inventor: Huang, Mao-Hsin, Tucheng City T'ai pei (TW)
(74) Representative: Köhler, Walter

(56) References cited:
- US-A- 2 468 444
- US-A- 5 150 967

## Description

### BACKGROUND OF THE INVENTION

### 1. Field of the Invention

The present invention relates to a stirring device. More particularly, the present invention relates to a stirring device for a beverage dispenser.

### 2. Description of Related Art

U.S. Patent No. 4,900,158 discloses a granita production machine comprising a container for receiving a mixture, a hollow cylinder securely mounted in the container, a refrigerating circuit for chilling the hollow cylinder, a first rotating cylindrical screw propeller placed inside and axially with the hollow cylinder, a motor mounted outside the container for driving an end of the first rotating cylindrical screw propeller, and a second rotating cylindrical screw propeller placed axially with and wound externally to the hollow cylinder. The other end of the first rotating cylindrical screw propeller is engaged with an end of the second rotating cylindrical screw propeller to allow joint rotation of the first and second rotating cylindrical screw propellers. The first and second rotating cylindrical screw propellers have opposite winding directions. Within the hollow cylinder the mixture will move in one direction while externally it will move in the opposite direction, giving rise to a continuous stirring of the mixture and reaching all points thereof.

However, the first and second rotating cylindrical screw propellers and the hollow cylinder occupy a considerable space in the container such that the amount of the mixture received in the container is reduced. Further, although the first and second rotating cylindrical screw propellers urge the mixture to circulate so as to avoid freeing of the mixture and thus control the size of the frozen particles of the mixture, the circulating pattern of the mixture is fixed and unable to break the structure of the frozen particles. Namely, the size of the frozen particles of the mixture is too large to provide the taste of granita.

US-A-5 150 967 discloses a stirring device according to the preamble of claim 1.

### OBJECTS OF THE INVENTION

An object of the present invention is to provide a stirring device for a beverage dispenser for enhancing the stirring efficiency and providing finer beverage particles.

Another object of the present invention is to provide a stirring device for a beverage dispenser for providing finer granita.

### SUMMARY OF THE INVENTION

A stirring device for a beverage dispenser in accordance with the present invention comprises a container, a stirring unit, a rotational unit, and a reciprocating unit. The container includes a compartment for receiving a beverage. The stirring unit mounted in the compartment includes a shaft and at least one stirring member. The rotational unit drives the shaft to turn, thereby turning the at least one stirring member for stirring the beverage. The reciprocating unit drives the shaft to reciprocate longitudinally, thereby urging the at least one stirring member to reciprocate longitudinally for stirring the beverage. A single motor drives the rotational unit and the reciprocating unit to cause the turning movement and the longitudinally reciprocal movement of the shaft.

Preferably, a heat-exchanger tube is mounted outside the container for changing a temperature of the beverage in the container.

Preferably, a fixed axle is mounted to a bottom of the compartment. The shaft includes an insertion section, and the fixed axle is mounted in the insertion action through loose coupling.

The at least one stirring member may be securely fixed to the shaft or mounted to the shaft through loose coupling.

The at least one stirring member may be a disc or a vane.

Preferably, the at least one stirring member includes at least one guiding hole that extends in a longitudinal direction or in a direction at an angle with the longitudinal direction.

In an example, the reciprocating unit is mounted between the rotational unit and the stirring unit.

In an example, the reciprocating unit includes a guiding frame, a guiding block, and at least one guiding rod. The guiding frame is fixed outside an end face of the container. The guiding block is fixed on the shaft, and the at least one guiding rod is fixed to the guiding block.

Preferably, the guiding frame includes a guiding groove defined in an inner circumference thereof. An end of the at least one guiding rod extends into the guiding groove of the guiding frame.

Preferably, the guiding groove is wavy.

Preferably, a roller is mounted to the end of the at least one guiding rod.

Preferably, the rotational unit includes a driving member, a driving shaft including an end driven by the driving member, and a driving jacket. The driving jacket is fixed to another end of the driving shaft for driving the reciprocating unit and the stirring unit.

Preferably, the driving jacket includes a slot. The at least one guiding rod extends through the slot and is in loose coupling with the slot. The guiding rod is turned when the driving jacket turns.

In another example, the rotational unit is mounted between the reciprocating unit and the stirring unit.

In another example, the rotational unit includes a guiding frame, a guiding block, and at least one guiding rod. The guiding frame is fixed outside an end face of the container. The guiding block is fixed to an end of the shaft. The at least one guiding rod includes an end fixed on the guiding block.

Preferably, the guiding frame includes a guiding groove in an inner circumference thereof. The at least one guiding rod includes another end extending into the guiding groove.

Preferably, the guiding groove includes a plurality of V-shaped sections.

Preferably, the reciprocating unit includes a driving member, a driving shaft having an end driven by the driving member, and a driving block. The driving member drives the driving shaft to reciprocate longitudinally. The driving block is fixed to the other end of the driving shaft for driving the reciprocating unit and the stirring unit to turn.

Preferably, the guiding block of the rotational unit includes a coupling hole in which the driving block is rotatably received for driving the rotational unit.

Preferably, the coupling unit tapers radially outward for preventing the driving block from disengaging-from the guiding block.

In a further example, the rotational unit includes a driving member, a driving shaft, a driving gear, a non-circular rod, and a driven gear. The driving member drives the driving shaft to turn. The driving gear is fixed on the driving shaft. The non-circular rod is fixed on an end of the shaft. The driven gear is mounted around the non-circular rod and longitudinally movable relative to the non-circular rod.

Preferably, two limiting plates are respectively mounted on two sides of the driven gear and hold the driving gear.

Preferably, the reciprocating unit includes a cam and an elastic element.

Preferably, the cam is fixed on the driving shaft and presses against an end of the non-circular rod.

Preferably, the elastic element is mounted around the driven shaft and includes two ends respectively abutting against the other end of the non-circular rod and an end face of the container.

The rotational unit may be mounted inside or outside the container.

The reciprocating unit may be mounted inside or outside the container.

Other objects, advantages and novel features of this invention will become more apparent from the following detailed description when taken in conjunction with the accompanying drawings.

### BRIEF DESCRIPTION OF THE DRAWINGS

Fig. 1 is a sectional view of a first embodiment of a stirring device for a beverage dispenser in accordance with the present invention;
Fig. 1A is a flattened view of a guiding frame of the stirring device in Fig. 1;
Fig. 2 is a perspective view, partly cutaway, of the first embodiment in accordance with the present invention;
Fig. 3 is another perspective view, partly cutaway, of the first embodiment in accordance with the present invention;
Fig. 4 is a sectional view of a second embodiment of the stirring device in accordance with the present invention;
Fig. 4A is a flattened view of a guiding frame of the stirring device in Fig. 4;
Fig. 5 is a perspective view, partly cutaway, of the second embodiment in accordance with the present invention;
Fig. 6 is another perspective view, partly cutaway, of the second embodiment in accordance with the present invention;
Fig. 7 is a sectional view of a third embodiment of the stirring device in accordance with the present invention;
Fig. 8 is a perspective view, partly cutaway, of the third embodiment in accordance with the present invention; and
Fig. 9 is another perspective view, partly cutaway, of the third embodiment in accordance with the present invention.

### DETAILED DESCRIPTION OF THE PREFERRED EMBODIMENTS

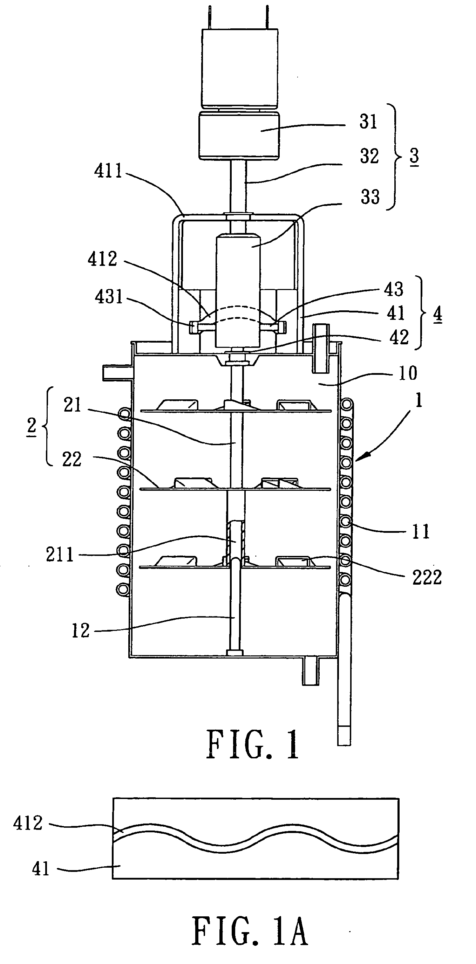

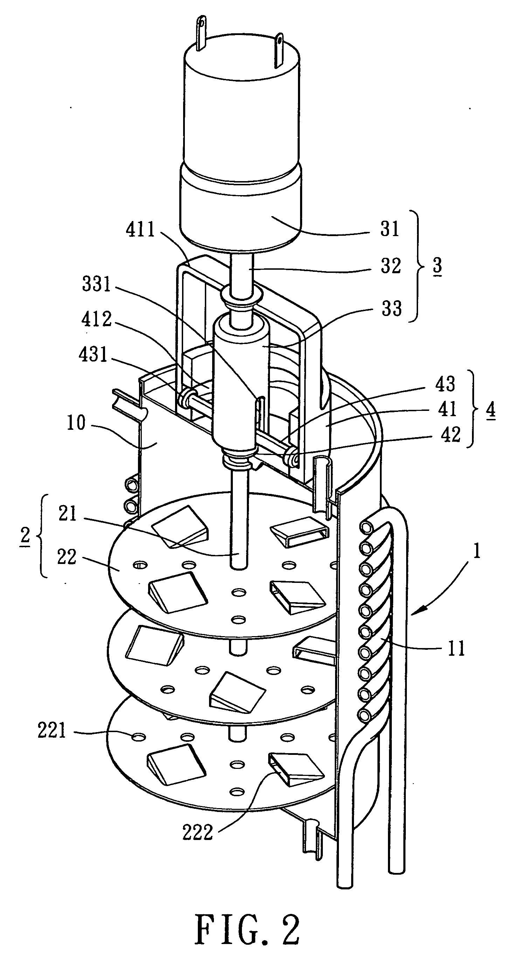

Referring to Figs. 1 and 2, a first embodiment of a stirring device for a beverage dispenser comprises a container 1, a stirring unit 2, a rotational unit 3, and a reciprocating unit 4. Preferably, the stirring device is used for stirring beverage to produce cold beverage with fine frozen particles and thus can be used with machines for producing snow cones, granita, or ice wine. In alternative application, the stirring device can be used with machines for producing hot beverage to prevent the beverage from becoming thick in local areas. In another alternative application, the stirring device can be used with machines for producing well-mixed beverage at normal temperature.

Still referring to Figs. 1 and 2, the first embodiment of the stirring device in accordance with the present invention comprises a compartment 10, a heat-exchanger tube 11, and a fixed axle 12. The compartment 10 is defined in the container 1 for receiving the stirring unit 2 and a beverage. The heat-exchanger tube 11 is wound around an outer circumference of the container 1 for cooling or heating the beverage in the container 1 for rising or lowering the temperature of the beverage. The fixed axle 12 is mounted to a bottom of the compartment 10 for positioning the stirring unit 2.

Still referring to Figs. 1 and 2, the stirring unit 2 of the first embodiment includes a shaft 21 and at least one stirring member 22 (three stirring discs in this embodiment). The shaft 21 is rotatably extended through an end face of the container 1 via a bearing (not labeled), allowing the shaft 21 to rotate or reciprocate in a longitudinal direction relative to the container 1. An end (the outer end) of the shaft 21 is connected to and driven by the rotational unit 3 and the reciprocating unit 4. The other end (the inner end) of the shaft 21 includes an insertion section 211.

In assembly, the fixed axle 12 in the container 1 is inserted into the insertion section 211 of the shaft 21, allowing the shaft 21 to rotate or longitudinally reciprocate. The stirring members 22 may be fixed to the shaft 21 or mounted to the shaft 21 through loose coupling. Further, each stirring member 22 may include a plurality of guiding holes 221 and 222 each having an opening that extends in a longitudinal direction or in a direction at an angle with the longitudinal direction for guiding the beverage and breaking the structure of the particles contained in the beverage.

Still referring to Figs. 1 and 2, the rotational unit 3 of the first embodiment may be mounted inside or outside the container 1 depending on the product need. The rotational unit 3 includes a driving member 31, a driving shaft 32, and a driving jacket 33. The driving member 31 is preferably a motor, a gear train, a pneumatic cylinder or a hydraulic cylinder for driving the driving shaft 32 at an end. The driving shaft 32 is rotatably extended through the reciprocating unit 4 via a bearing (not labeled). The driving jacket 33 is fixed to the other end of the driving shaft 32 and includes at least one slot 331 for actuating the reciprocating unit 4 and the stirring unit 2.

Referring to Figs. 1, 1A, and 2, the reciprocating unit 4 of the first embodiment may be mounted inside or outside the container 1 depending on the product need. The reciprocating unit 4 is mounted between the rotational unit 3 and the stirring unit 2. The reciprocating unit 4 includes a guiding frame 41, a guiding block 42, and at least one guiding rod 43 (two in this embodiment). The guiding frame 41 is fixed outside an end face of the container 1 and includes a supporting rib 411 and a guiding groove 412. The supporting rib 411 is extended from guiding frame 41 and located outside the end face of the container 1, and the driving shaft 32 is extended through the supporting rib 411. The guiding groove 412 is defined in an inner circumference of the guiding frame 41 and preferably wavy. The guiding block 42 is fixed on the shaft 21. Each guiding rod 43 is fixed to the guiding block 42 and has an end extending through the slot 331 of the driving jacket 33 into the guiding groove 412. Preferably, a roller 431 is mounted to the end of each guiding rod 43, allowing smooth movement of the guiding rod 43 along the guiding groove 412. Further, the guiding rods 43 are in loose coupling with the slot 331 of the driving jacket 33. Thus, the driving jacket 33 drives the guiding rods 43 to turn when the driving shaft 32 turns.

Referring to Fig. 2, in use, a beverage is filled into the compartment 10 of the container 1, and the heat-exchanger tube 11 is activated to cool or heat the beverage. Meanwhile, the driving member 31 drives the driving shaft 32 and the driving jacket 33, which in turn drives the guiding rods 43 of the reciprocating unit 4 through provision of the slot 331 of the driving jacket 33. The shaft 21 of the stirring unit 2 is driven by the guiding rods 43 via the guiding block 42. Hence, the stirring members 22 of the stirring unit 2 stir and mix the beverage uniformly while preventing the beverage from freezing or becoming thick in local areas.

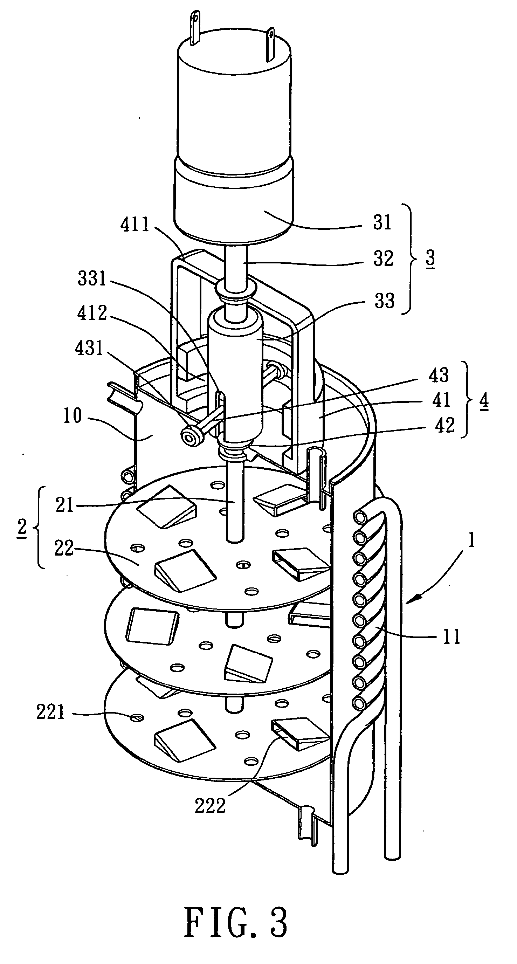

Referring to Fig. 3, when the guiding rods 43 of the reciprocating unit 4 turns, the ends of the guiding rods 43 move along the wavy guiding slot 412 of the guiding frame 41, causing the shaft 21 to reciprocate in the longitudinal direction due to level differences resulting from different phase positions of the guiding rods 43 in the guiding groove 412. Hence, the stirring members 22 of the stirring unit 2 reciprocate in the longitudinal direction to stir the beverage. Meanwhile, the guiding holes 221 and 222 of each stirring member 22 guide flow of the beverage and break the structure of the particles in the beverage, thereby uniformly mixing the beverage and preventing the beverage from freezing or becoming thick in local areas.

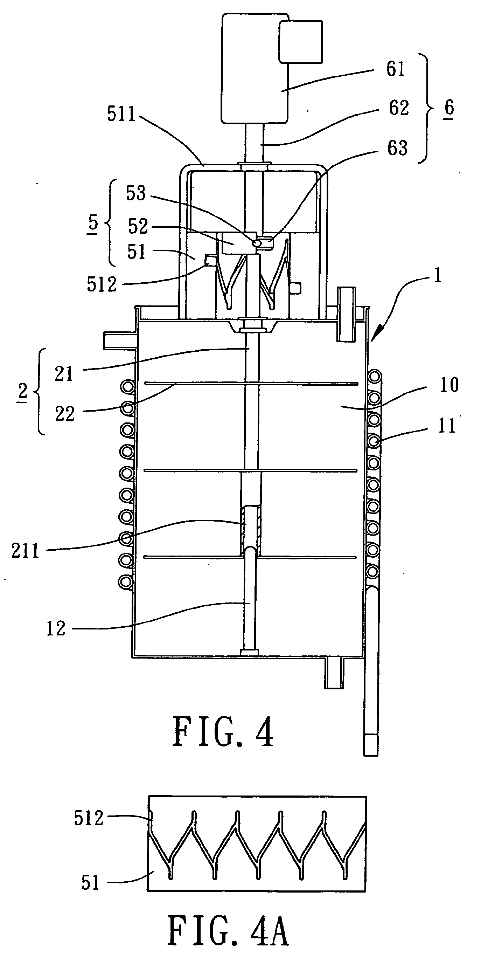

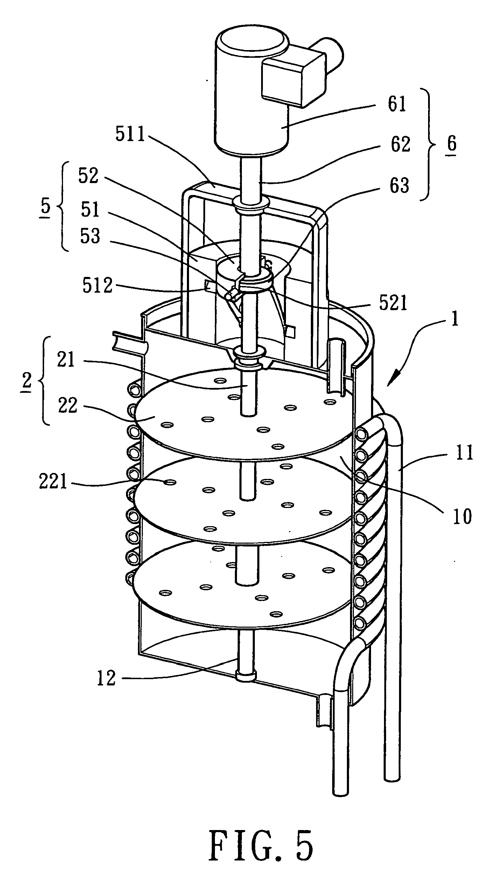

Figs. 4 and 5 illustrate a second embodiment of the stirring device in accordance with the present invention. Compared to the first embodiment, the second embodiment includes a container 1, a stirring unit 2, a rotational unit 5, and a reciprocating unit 6. The container 1 also includes a compartment 10, a heat-exchanger tube 11, and a fixed axle 12. The stirring unit 2 also includes a shaft 21 and at least one stirring member 22 (three stirring discs in this embodiment). An end of the fixed axle 12 is received in the insertion section 211 of the shaft 21. Each stirring member 22 includes at least one guiding hole 221 that extends longitudinally. The rotational unit 5 is mounted between the reciprocating unit 6 and the stirring unit 2. The rotational unit 5 includes a guiding frame 51, a guiding block 52, and at least one guiding rod 53. The reciprocating unit 6 includes a driving member 61, a driving shaft 62, and a driving block 63.

Referring to Figs. 4, 4A, and 5, the guiding frame 51 is fixed outside an end face of the container 1 and includes a supporting rib 511 and a guiding groove 512. The supporting rib 511 is extended from the guiding frame 51 and located outside the end face of the container 1, and the driving shaft 62 is extended through the supporting rib 511. The guiding groove 512 is defined in an inner circumference of the guiding frame 51 and includes a plurality of V-shaped sections. The guiding block 52 is fixed on the shaft 21. The guiding rod 53 is fixed to the guiding block 52 and includes an end extending into the guiding groove 512, allowing the guiding rod 53 to slide along the guiding groove 512. The guiding block 52 includes a coupling hole 521 that tapers radially outward.

The driving member 61 is preferably a cam-type motor, a gear train, a pneumatic cylinder, or a hydraulic cylinder for driving the driving shaft 62 at an end thereof. The driving shaft 62 is rotatably extended through the supporting rib 511 via a bearing (not labeled). The driving block 63 is fixed to the other end of the driving shaft 62. The driving block 63 is rotatably received in the coupling hole 521 of the guiding block 52 for driving the rotational unit 5. The tapered coupling hole 521 prevents the driving block 63 from disengaging from the guiding block 52.

Referring to Fig. 5, in use, a beverage is filled into the compartment 10 of the container 1, and the heat-exchanger tube 11 is activated to cool or heat the beverage. Meanwhile, the driving member 61 drives the driving shaft 62 and the driving block 63 of the reciprocating unit 6 to reciprocate longitudinally, which in turn drives the guiding block 52 of the rotational unit 5 to reciprocate longitudinally. The shaft 21 of the stirring unit 2 longitudinally reciprocates such that the stirring members 22 stir the beverage by longitudinal reciprocating movement of the stirring member 22.

Meanwhile, the guiding holes 221 guide the beverage to flow longitudinally and break the structure of the particles in the beverage, thereby uniformly mixing the beverage and preventing the beverage from freezing or becoming thick in local areas.

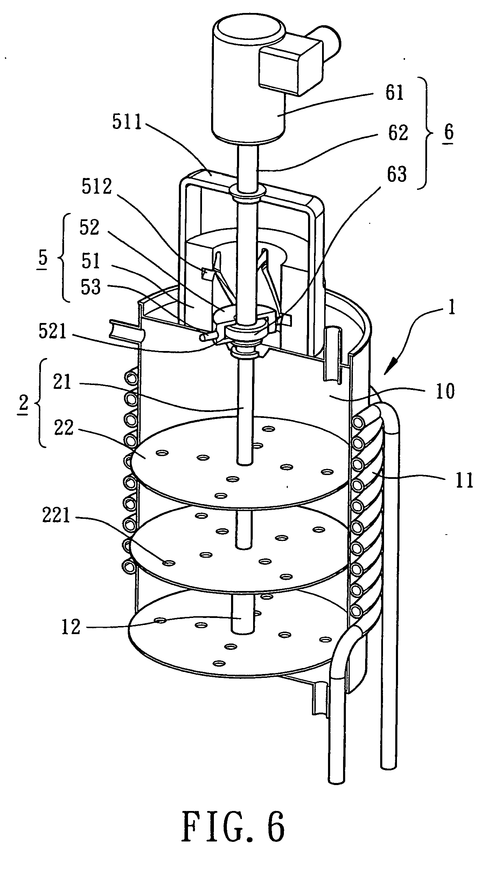

Referring to Fig. 6, when the guiding block 52 of the rotational unit 5 reciprocates longitudinally, the guiding rod 53 moves along the guiding groove 512 of the guiding frame 51. The guiding groove 512 includes a plurality of V-shaped sections and thus has level differences due to different phase positions of the guiding rod 53 in the guiding groove 512. Hence, the guiding rod 53 drives the shaft 21 to turn via the guiding block 52. Thus, the stirring members 22 of the stirring unit 2 rotate and stir the beverage through movement of the guiding rod 53 and the guiding block 52, thereby uniformly mixing the beverage and preventing the beverage from freezing or becoming thick in local areas.

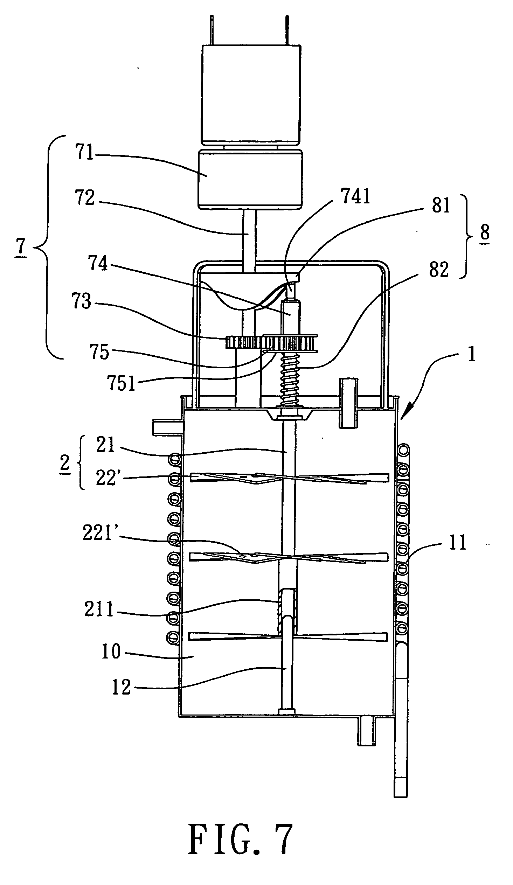

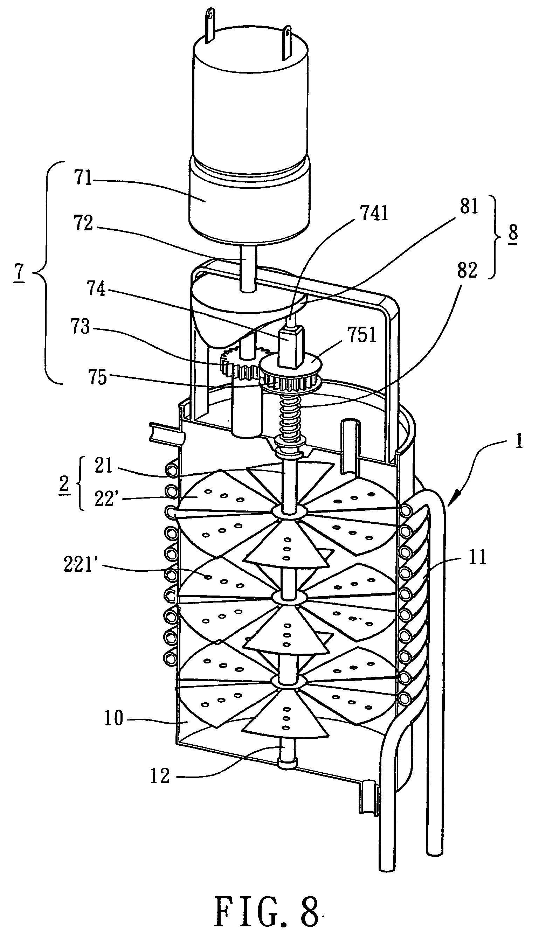

Figs. 7 and 8 illustrate a third embodiment of the stirring device in accordance with the present invention. Compared to the first embodiment and the second embodiment, the third embodiment includes a container 1, a stirring unit 2, a rotational unit 7, and a reciprocating unit 8. The container 1 also includes a compartment 10, a heat-exchanger tube 11, and a fixed axle 12. The stirring unit 2 also includes a shaft 21 and at least one stirring members 22' (three stirring members each including a plurality of vanes in this embodiment). An end of the fixed axle 12 is received in the insertion section 211 of the shaft 21. Each stirring member 22' includes at least one guiding hole 221' that extends longitudinally. The rotational unit 7 includes a driving member 71, a driving shaft 72, a driving gear 73, a non-circular rod 74, and a driven gear 75. The reciprocating unit 8 includes a cam 81 and an elastic element 82. The rotational unit 7 and the reciprocating unit 8 may be mounted inside or outside the container 1 depending on the product need.

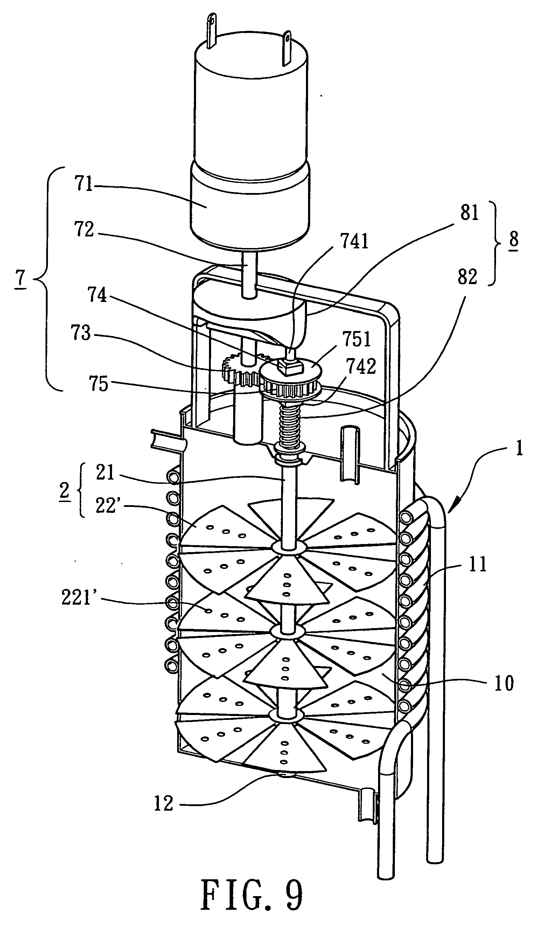

Still referring to Fig. 7 and 8, the driving member 71 is preferably a motor, a gear train, a pneumatic cylinder, or a hydraulic cylinder for driving the driving shaft 72 at an end thereof. The driving shaft 72 is rotatably mounted outside the container 1 via an axle tube (not labeled). The driving gear 73 is fixed on the driving shaft 72. The non-circular rod 74 is fixed to an outer end of the shaft 21 and includes a first abutting end 741 and a second abutting end 742 (see Fig. 9). The driven gear 75 is mounted around the non-circular rod 74 and longitudinally movable relative to the non-circular rod 74 for driving the shaft 21 to turn. Two limiting plates 751 are respectively mounted on two sides of the driven gear 75 and hold the driving gear 73, thereby assuring meshing between the driving gear 73 and the driven gear 75. The cam 81 is fixed on the driving shaft 72, and the first abutting end 741 of the non-circular rod 74 presses against the cam 81. The shaft 21 extends through the elastic element 82. Two ends of the elastic element 82 respectively abut against the second abutting end 742 of the non-circular rod 74 and an end face of the container 1 for biasing the non-circular rod 74, thereby urging the first abutting end 741 of the non-circular rod 74 to press against the cam 81.

Referring to Fig. 8, in use, a beverage is filled into the compartment 10 of the container 1, and the heat-exchanger tube 11 is activated to cool or heat the beverage. Meanwhile, the driving member 71 drives the driven gear 75 and the non-circular rod 74 via the driving shaft 72 and the driving gear 73, which in turn drives the shaft 21. The stirring members 22' stir the beverage for uniformly mixing the beverage and preventing the beverage from freezing or becoming thick in local areas.

Referring to Fig. 9, since the cam 81 turns jointly with the driving shaft 72 and since the first abutting end 741 of the non-circular rod 74 presses against a non-planar underside of the cam 81, the non-circular rod 74 reciprocates longitudinally when the cam 81 turns and presses the first abutting end 741 of the non-circular rod 74 with different levels of the non-planar underside. More specifically, when the cam 81 is in a position where the pressing force imparted to the non-circular rod 74 is sufficient to overcome the biasing force from the elastic element 82 to the non-circular rod 74, the non-circular rod 74 longitudinally moves toward the container 1 and causes longitudinal movement of the shaft 21 and the stirring members 22'. On the other hand, when the cam 81 is in another position where the pressing force imparted to the non-circular rod 74 is insufficient to overcome the biasing force from the elastic element 82 to the non-circular rod 74, the non-circular rod 74 longitudinally moves away from the container 1 and causes longitudinal movement of the shaft 21 and the stirring members 22'. Thus, the shaft 21 longitudinally reciprocates under the action of the reciprocating unit 8, causing longitudinal reciprocating movement of the stirring members 22' for stirring the beverage. Meanwhile, the guiding holes 221' guide the beverage to flow longitudinally and break the structure of the particles in the beverage, thereby uniformly mixing the beverage and preventing the beverage from freezing or becoming thick in local areas.

As apparent from the foregoing, the stirring efficiency is improved while providing a beverage with finer particles. Further, the stirring unit 2 is simplified in structure, providing more space for receiving the beverage.

While the principles of this invention have been disclosed in connection with specific embodiments, it should be understood by those skilled in the art that these descriptions are not intended to limit the scope of the invention, and that any modification and variation is defined only by the appended claims.

## Claims

1. A stirring device for a beverage dispenser, comprising:
a container (1) including a compartment (10) for receiving a beverage;
a stirring unit (2) mounted in the compartment (10), the stirring unit (2) including a shaft (21) and at least one stirring member (22);
a rotational unit (3, 5, 7) for driving the shaft (21) to turn so as to generate a turning movement, thereby turning said at least one stirring member (22) for stirring the beverage; and
a reciprocating (4, 6, 8) unit for driving the shaft (21) to reciprocate in a longitudinal direction so as to generate a longitudinally reciprocal movement of the shaft (21), thereby urging said at least one stirring member (22) to reciprocate longitudinally for stirring the beverage;
**characterised in that** a single motor drives said rotational unit (3, 5, 7) and said reciprocating unit (4, 6, 8) to cause the turning movement and the longitudinally reciprocal movement of the shaft (21).

2. The stirring device for a beverage dispenser as claimed in claim 1, further comprising a heat-exchanger tube (11) mounted outside the container (1) for changing a temperature of the beverage in the container (1).

3. The stirring device for a beverage dispenser as claimed in claim 1, further comprising a fixed axle (12) mounted to a bottom of the compartment (11), the shaft (21) including an insertion section (211), the fixed axle (12) being mounted in the insertion section (211) through loose coupling.

4. The stirring device for a beverage dispenser as claimed in claim 1, wherein said at least one stirring member (22) is securely fixed to the shaft (21) or mounted to the shaft (21) through loose coupling.

5. The stirring device for a beverage dispenser as claimed in claim 1, wherein the reciprocating unit (4) is mounted between the rotational unit (3) and the stirring unit (2).

6. The stirring device for a beverage dispenser as claimed in claim 1, wherein the reciprocating unit (4) includes a frame (41), a block (42), and at least one rod (43), the frame (41) being fixed outside an end face of the container (1), the block (42) being fixed on the shaft (21), and said at least one rod (43) being fixed to the block (42).

7. The stirring device for a beverage dispenser as claimed in claim 6, wherein the frame (41) includes a groove (412) defined in an inner circumference thereof, an end of said at least one rod (43) extending into the groove (412) of the frame (41).

8. The stirring device for a beverage dispenser as claimed in claim 7, further comprising a roller (431) mounted to the end of said at least one rod (43).

9. The stirring device for a beverage dispenser as claimed in claim 6, wherein the rotational unit (3) includes a driving member (31), a driving shaft (32) including an end driven by the driving member (31), and a driving jacket (33), the driving jacket (33) being fixed to another end of the driving shaft (32) for driving the reciprocating unit (4) and the stirring unit (2).

10. The stirring device for a beverage dispenser as claimed in claim 9, wherein the driving jacket (33) includes a slot (331), said at least one rod (43) extending through the slot (331) and being in loose coupling with the slot (331), the rod (43) being turned when the driving jacket (33) turns.

11. The stirring device for a beverage dispenser as claimed in claim 1, wherein the rotational unit (3) is mounted between the reciprocating unit (4) and the stirring unit (2).

12. The stirring device for a beverage dispenser as claimed in claim 11, wherein the rotational unit (5) includes a frame (51), a block (52), and at least one rod (53), the frame (51) being fixed outside an end face of the container (1), the block (52) being fixed to an end of the shaft (21), said at least one rod (53) including an end fixed on the block (52).

13. The stirring device for a beverage dispenser as claimed in claim 12, wherein the frame (51) includes a groove (512) in an inner circumference thereof, said at least one rod (53) including another end extending into the groove (512).

14. The stirring device for a beverage dispenser as claimed in claim 12, wherein the reciprocating unit (6) includes a driving member (61), a driving shaft (62) having an end driven by the driving member (61), and a driving block (63), the driving member (61) driving the driving shaft (62) to reciprocate longitudinally, the driving block (63) being fixed to another end of the driving shaft (62) for driving the reciprocating unit (6) and the stirring unit (2) to turn.

15. The stirring device for a beverage dispenser as claimed in claim 14, wherein the block (52) of the rotational unit (5) includes a coupling hole (521) in which the driving block (63) is rotatably received for driving the rotational unit (5).

16. The stirring device for a beverage dispenser as claimed in claim 15, wherein the coupling hole (521) tapers radially outward for preventing the driving block (63) from disengaging from the block (52).

17. The stirring device for a beverage dispenser as claimed in claim 1, wherein the rotational unit (7) includes a driving member (71), a driving shaft (72), a driving gear (73), a rod (74), and a driven gear (75), the driving member (71) driving the driving shaft (72) to turn, the driving gear (73) being fixed on the driving shaft (72), the rod (74) being fixed on an end of the driving shaft (72), the driven gear (75) being mounted around the rod (74) and longitudinally movable relative to the rod (74).

18. The stirring device for a beverage dispenser as claimed in claim 17, further comprising two limiting plates (751) respectively mounted on two sides of the driven gear (75), the limiting plates (751) holding the driving gear (73).

19. The stirring device for a beverage dispenser as claimed in claim 17, wherein the reciprocating unit (8) includes a cam (81) which is fixed on the driving shaft (72) and presses against an end of the rod (74), and an elastic element (82) which is mounted around the driving shaft (72) and includes two ends respectively abutting against another end of the rod (74) and an end face of the container (1).

20. The stirring device for a beverage dispenser as claimed in claim 1, wherein the rotational unit (3, 5, 7) is mounted outside the container (1).

21. The stirring device for a beverage dispenser as claimed in claim 1, wherein the reciprocating unit (4, 6, 8) is mounted outside the container (1).

22. The stirring device for a beverage dispenser as claimed in claim 1, wherein said single motor drives said rotational unit (3, 7) to turn such that the rotational movement of said rotational unit (3, 7) actuates said reciprocating unit (4, 8) to cause the longitudinally reciprocal movement of the shaft (21).

23. The stirring device for a beverage dispenser as claimed in claim 1, wherein said single motor drives said reciprocating unit (6) to reciprocate in the longitudinal direction such that the longitudinally reciprocal movement of said reciprocating unit (6) actuates said rotational unit (5) to cause the rotational movement of the shaft (21).

## Patentansprüche

1. Rührvorrichtung für einen Getränkespender, die umfasst:
einen Behälter (1), der ein Fach (10) für die Aufnahme eines Getränks enthält;
eine Rühreinheit (2), die in dem Fach (10) angebracht ist, wobei die Rühreinheit (2) eine Welle (21) und wenigstens ein Rührelement (22) enthält;
eine Dreheinheit (3, 5, 7), um die Welle (21) rotatorisch anzutreiben, um eine Drehbewegung zu erzeugen, wodurch das wenigstens eine Rührelement (22) gedreht wird, um das Getränk umzurühren; und
eine Hin- und Herbewegungseinheit (4, 6, 8), um die Welle (21) zu einer longitudinalen Hin- und Herbewegung anzutreiben, um so eine longitudinale Hin- und Herbewegung der Welle (21) zu erzeugen, wodurch das wenigstens eine Rührelement (22) dazu gezwungen wird, sich longitudinal hin und her zu bewegen, um das Getränk umzurühren;
**dadurch gekennzeichnet, dass**
ein einziger Motor die Rühreinheit (3, 5, 7) und die Hin- und Herbewegungseinheit (4, 6, 8) antreibt, um die Drehbewegung und die longitudinale Hin- und Herbewegung der Welle (21) hervorzurufen.

2. Rührvorrichtung für einen Getränkespender nach Anspruch 1, die ferner ein Wärmetauscherrohr (11) umfasst, das außerhalb des Behälters (1) angebracht ist, um eine Temperatur des Getränks in dem Behälter (1) zu ändern.

3. Rührvorrichtung für einen Getränkespender nach Anspruch 1, die ferner eine feste Achse (12) umfasst, die an einem Boden des Fachs (11) angebracht ist, wobei die Welle (21) einen Einsteckabschnitt (211) aufweist und die feste Achse (12) in dem Einsteckabschnitt (211) durch lose Kopplung angebracht ist.

4. Rührvorrichtung für einen Getränkespender nach Anspruch 1, wobei das wenigstens eine Rührelement (22) an der Welle (21) befestigt ist oder an der Welle (21) durch lose Kopplung angebracht ist.

5. Rührvorrichtung für einen Getränkespender nach Anspruch 1, wobei die Hin- und Herbewegungseinheit (4) zwischen der Dreheinheit (3) und der Rühreinheit (2) angebracht ist.

6. Rührvorrichtung für einen Getränkespender nach Anspruch 1, wobei die Hin- und Herbewegungseinheit (4) einen Rahmen (41), einen Block (42) und wenigstens einen Stab (43) enthält, wobei der Rahmen (41) außerhalb einer Stirnfläche des Behälters (1) befestigt ist, der Block (42) an der Welle (21) befestigt ist und der wenigstens eine Stab (43) an dem Block (42) befestigt ist.

7. Rührvorrichtung für einen Getränkespender nach Anspruch 6, wobei der Rahmen (41) eine in seinem inneren Umfang definierte Nut (412) aufweist, wobei sich ein Ende des wenigstens einen Stabs (43) in die Nut (412) des Rahmens (41) erstreckt.

8. Rührvorrichtung für einen Getränkespender nach Anspruch 7, die ferner eine Rolle (431) umfasst, die am Ende des wenigstens einen Stabs (43) angebracht ist.

9. Rührvorrichtung für einen Getränkespender nach Anspruch 6, wobei die Dreheinheit (3) ein Antriebselement (31), eine Antriebswelle (32) mit einem durch das Antriebselement (31) angetriebenen Ende und eine Antriebshülse (33) enthält, wobei die Antriebshülse (33) am anderen Ende der Antriebswelle (32) befestigt ist, um die Hin- und Herbewegungseinheit (4) und die Rühreinheit (2) anzutreiben.

10. Rührvorrichtung für einen Getränkespender nach Anspruch 9, wobei die Antriebshülse (33) einen Schlitz (331) enthält, wobei sich der wenigstens eine Stab (43) durch den Schlitz (331) erstreckt und mit dem Schlitz (331) lose gekoppelt ist, wobei der Stab (43) gedreht wird, wenn sich die Antriebshülse (33) dreht.

11. Rührvorrichtung für einen Getränkespender nach Anspruch 1, wobei die Dreheinheit (3) zwischen der Hin- und Herbewegungseinheit (4) und der Rühreinheit (2) angebracht ist.

12. Rührvorrichtung für einen Getränkespender nach Anspruch 11, wobei die Dreheinheit (5) einen Rahmen (51), einen Block (52) und wenigstens einen Stab (53) enthält, wobei der Rahmen (51) außerhalb einer Stirnfläche des Behälters (1) befestigt ist, der Block (52) an einem Ende der Welle (21) befestigt ist und der wenigstens eine Stab (53) ein an dem Block (52) befestigtes Ende enthält.

13. Rührvorrichtung für einen Getränkespender nach Anspruch 12, wobei der Rahmen (51) an seinem inneren Umfang eine Nut (512) aufweist, wobei der wenigstens eine Stab (53) ein weiteres Ende aufweist, das sich in die Nut (512) erstreckt.

14. Rührvorrichtung für einen Getränkespender nach Anspruch 12, wobei die Hin- und Herbewegungseinheit (6) ein Antriebselement (61), eine Antriebswelle (62), wovon ein Ende durch das Antriebselement (61) angetrieben wird, und einen Antriebsblock (63) enthält, wobei das Antriebselement (61) die Antriebswelle (62) antreibt, um sie longitudinal hin und her zu bewegen, und der Antriebsblock (63) am anderen Ende der Antriebswelle (62) befestigt ist, um die Hin- und Herbewegungseinheit (6) anzutreiben und die Rühreinheit (2) zu drehen.

15. Rührvorrichtung für einen Getränkespender nach Anspruch 14, wobei der Block (52) der Dreheinheit (5) ein Kopplungsloch (521) aufweist, in dem der Antriebsblock (63) drehbar aufgenommen ist, um die Dreheinheit (5) anzutreiben.

16. Rührvorrichtung für einen Getränkespender nach Anspruch 15, wobei das Kopplungsloch (521) radial auswärts konisch zuläuft, um zu verhindern, dass der Eingriff zwischen dem Antriebsblock (63) und dem Block (52) gelöst wird.

17. Rührvorrichtung für einen Getränkespender nach Anspruch 1, wobei die Dreheinheit (7) ein Antriebselement (71), eine Antriebswelle (72), ein Antriebszahnrad (73), einen Stab (74) und ein angetriebenes Zahnrad (75) enthält, wobei das Antriebselement (71) die Antriebswelle (72) zu einer Drehung antreibt, das Antriebszahnrad (73) an der Antriebswelle (72) befestigt ist, der Stab (74) an einem Ende der Antriebswelle (72) befestigt ist und das angetriebene Zahnrad (75) um den Stab (74) angebracht ist und relativ zu dem Stab (74) longitudinal beweglich ist.

18. Rührvorrichtung für einen Getränkespender nach Anspruch 17, die ferner zwei Begrenzungsplatten (751) umfasst, die an zwei entsprechenden Seiten des angetriebenen Zahnrades (75) angebracht sind, wobei die Begrenzungsplatten (751) das Antriebszahnrad (73) halten.

19. Rührvorrichtung für einen Getränkespender nach Anspruch 17, wobei die Hin- und Herbewegungseinheit (8) einen Nocken (81) enthält, der an der Antriebswelle (72) befestigt ist und gegen ein Ende des Stabs (74) drückt, und ein elastisches Element (82) enthält, das um die Antriebswelle (72) angebracht ist und zwei Enden aufweist, die an einem weiteren Ende des Stabs (74) bzw. an einer Stirnfläche des Behälters (1) anliegen.

20. Rührvorrichtung für einen Getränkespender nach Anspruch 1, wobei die Dreheinheit (3, 5, 7) außerhalb des Behälters (1) angebracht ist.

21. Rührvorrichtung für einen Getränkespender nach Anspruch 1, wobei die Hin- und Herbewegungseinheit (4, 6, 8) außerhalb des Behälters (1) angebracht ist.

22. Rührvorrichtung für einen Getränkespender nach Anspruch 1, wobei der einzige Motor die Dreheinheit (3, 7) zu einer Drehung antreibt, derart, dass die Drehbewegung der Dreheinheit (3, 7) die Hin- und Herbewegungseinheit (4, 8) betätigt, um die longitudinale Hin- und Herbewegung der Welle (21) hervorzurufen.

23. Rührvorrichtung für einen Getränkespender nach Anspruch 1, wobei der einzige Motor die Hin- und Herbewegungseinheit (6) zu einer longitudinalen Hin- und Herbewegung antreibt, derart, dass die longitudinale Hin- und Herbewegung der Hin- und Herbewegungseinheit (6) die Dreheinheit (5) betätigt, um die Drehbewegung der Welle (21) hervorzurufen.

## Revendications

1. Dispositif d'agitation destiné à un distributeur de boissons, comprenant :
un réservoir (1) comprenant un compartiment (10) destiné à recevoir une boisson ;
une unité d'agitation (2) montée dans le compartiment (10), l'unité d'agitation (2) comprenant un arbre (21) et au moins un élément d'agitation (22) ;
une unité de rotation (3, 5, 7) destinée à entraîner l'arbre (21) de façon à tourner afin de générer un mouvement de rotation, faisant ainsi tourner ledit élément d'agitation au moins (22) de façon à agiter la boisson ; et
une unité de mouvement de va-et-vient (4, 6, 8) destinée à entraîner l'arbre (21) de façon à l'animer d'un mouvement de va-et-vient dans une direction longitudinale afin de générer un mouvement longitudinal de va-et-vient de l'arbre (21), forçant ainsi ledit élément d'agitation au moins (22) à s'animer longitudinalement d'un mouvement de va-et-vient de façon à agiter la boisson ;
**caractérisé en ce que**
un seul moteur entraîne ladite unité de rotation (3, 5, 7) et ladite unité de mouvement de va-et-vient (4, 6, 8) de façon à provoquer le mouvement de rotation et le mouvement longitudinal de va-et-vient de l'arbre (21).

2. Dispositif d'agitation destiné à un distributeur de boissons selon la revendication 1, comprenant en outre un tube échangeur (11) monté à l'extérieur du réservoir (1) afin de changer une température de la boisson dans le réservoir (1).

3. Dispositif d'agitation destiné à un distributeur de boissons selon la revendication 1, comprenant en outre un axe fixe (12) monté sur un fond du compartiment (11), l'arbre (21) comprenant une section d'insertion (211), l'axe fixe (12) étant monté dans la section d'insertion (211) par le biais d'un accouplement démontable.

4. Dispositif d'agitation destiné à un distributeur de boissons selon la revendication 1, dans lequel ledit élément d'agitation au moins (22) est fixé de manière serrée sur l'arbre (21) ou est monté sur l'arbre (21) par le biais d'un accouplement démontable.

5. Dispositif d'agitation destiné à un distributeur de boissons selon la revendication 1, dans lequel l'unité de mouvement de va-et-vient (4) est montée entre l'unité de rotation (3) et l'unité d'agitation (2).

6. Dispositif d'agitation destiné à un distributeur de boissons selon la revendication 1, dans lequel l'unité de mouvement de va-et-vient (4) comprend un châssis (41), un bloc (42), et au moins une tige (43), le châssis (41) étant fixé à l'extérieur d'une face frontale du réservoir (1), le bloc (42) étant fixé sur l'arbre (21), et ladite tige au moins (43) étant fixée sur le bloc (42).

7. Dispositif d'agitation destiné à un distributeur de boissons selon la revendication 6, dans lequel le châssis (41) comprend une rainure (412) définie dans une circonférence interne de celui-ci, une extrémité de ladite tige au moins (43) s'étendant dans la rainure (412) du châssis (41).

8. Dispositif d'agitation destiné à un distributeur de boissons selon la revendication 7, comprenant en outre un cylindre (431) monté sur l'extrémité de ladite tige au moins (43).

9. Dispositif d'agitation destiné à un distributeur de boissons selon la revendication 6, dans lequel l'unité de rotation (3) comprend un élément d'entraînement (31), un arbre d'entraînement (32) comprenant une extrémité entraînée par l'élément d'entraînement (31), et une chemise d'entraînement (33), la chemise d'entraînement (33) étant fixée sur une autre extrémité de l'arbre d'entraînement (32) afin d'entraîner l'unité de mouvement de va-et-vient (4) et l'unité d'agitation (2).

10. Dispositif d'agitation destiné à un distributeur de boissons selon la revendication 9, dans lequel la chemise d'entraînement (33) comprend une fente (331), ladite tige au moins (43) s'étendant dans la fente (331) et étant en accouplement démontable avec la fente (331), la tige (43) étant tournée lorsque la chemise d'entraînement (33) tourne.

11. Dispositif d'agitation destiné à un distributeur de boissons selon la revendication 1, dans lequel l'unité de mouvement de rotation (3) est montée entre l'unité de mouvement de va-et-vient (4) et l'unité d'agitation (2).

12. Dispositif d'agitation destiné à un distributeur de boissons selon la revendication 11, dans lequel l'unité de rotation (5) comprend un châssis (51), un bloc (52), et au moins une tige (53), le châssis (51) étant fixé à l'extérieur d'une face frontale du réservoir (1), le bloc (52) étant fixé sur une extrémité de l'arbre (21), ladite tige au moins (53) comprenant une extrémité fixée sur le bloc (52).

13. Dispositif d'agitation destiné à un distributeur de boissons selon la revendication 12, dans lequel le châssis (51) comprend une rainure (512) dans une circonférence interne de celui-ci, ladite tige au moins (53) comprenant une autre extrémité s'étendant dans la rainure (512).

14. Dispositif d'agitation destiné à un distributeur de boissons selon la revendication 12, dans lequel l'unité de mouvement de va-et-vient (6) comprend un élément d'entraînement (61), un arbre d'entraînement (62) ayant une extrémité entraînée par l'élément d'entraînement (61), et un bloc d'entraînement (63), l'élément d'entraînement (61) entraînant l'arbre d'entraînement (62) afin de l'animer d'un mouvement de va-et-vient longitudinal, le bloc d'entraînement (63) étant fixé sur une autre extrémité de l'arbre d'entraînement (62) afin d'entraîner l'unité de mouvement de va-et-vient (6) et l'unité d'agitation (2) de façon à ce qu'elles tournent.

15. Dispositif d'agitation destiné à un distributeur de boissons selon la revendication 14, dans lequel le bloc (52) de l'unité de rotation (5) comprend un trou d'accouplement (521) dans lequel le bloc d'entraînement (63) est reçu de manière rotative afin d'entraîner l'unité de rotation (5).

16. Dispositif d'agitation destiné à un distributeur de boissons selon la revendication 15, dans lequel le trou d'accouplement (521) s'effile radialement vers l'extérieur afin d'empêcher le bloc d'entraînement (63) de se désengager du bloc (52).

17. Dispositif d'agitation destiné à un distributeur de boissons selon la revendication 1, dans lequel l'unité de rotation (7) comprend un élément d'entraînement (71), un arbre d'entraînement (72), un engrenage d'entraînement (73), une tige (74), et un engrenage entraîné (75), l'élément d'entraînement (71) entraînant l'arbre d'entraînement (72) de façon à ce qu'il tourne, l'engrenage d'entraînement (73) étant fixé sur l'arbre d'entraînement (72), la tige (74) étant fixée sur une extrémité de l'arbre d'entraînement (72), l'engrenage entraîné (75) étant monté autour de la tige (74) et étant mobile longitudinalement par rapport à la tige (74).

18. Dispositif d'agitation destiné à un distributeur de boissons selon la revendication 17, comprenant en outre deux plaques de limitation (751) respectivement montées sur deux côtés de l'engrenage entraîné (75), les plaques de limitation (751) maintenant l'engrenage d'entraînement (73).

19. Dispositif d'agitation destiné à un distributeur de boissons selon la revendication 17, dans lequel l'unité de mouvement de va-et-vient (8) comprend une came (81) qui est fixée sur l'arbre d'entraînement (72) et s'appuie contre une extrémité de la tige (74), et un élément élastique (82) qui est monté autour de l'arbre d'entraînement (72) et qui comprend deux extrémités butant respectivement contre une autre extrémité de la tige (74) et une face frontale du réservoir (1).

20. Dispositif d'agitation destiné à un distributeur de boissons selon la revendication 1, dans lequel l'unité de rotation (3, 5, 7) est montée à l'extérieur du réservoir (1).

21. Dispositif d'agitation destiné à un distributeur de boissons selon la revendication 1, dans lequel l'unité de mouvement de va-et-vient (4, 6, 8) est montée à l'extérieur du réservoir (1).

22. Dispositif d'agitation destiné à un distributeur de boissons selon la revendication 1, dans lequel ledit moteur unique entraîne ladite unité de rotation (3, 7) de façon à ce qu'elle tourne afin que le mouvement de rotation de ladite unité de rotation (3, 7) actionne ladite unité de mouvement de va-et-vient (4, 8) de façon à provoquer le mouvement de va-et-vient longitudinal de l'arbre (21).

23. Dispositif d'agitation destiné à un distributeur de boissons selon la revendication 1, dans lequel ledit moteur unique entraîne ladite unité de mouvement de va-et-vient (6) afin de l'animer d'un mouvement de va-et-vient dans la direction longitudinale de façon à ce que le mouvement de va-et-vient longitudinal de ladite unité de mouvement de va-et-vient (6) actionne ladite unité de rotation (5) de façon à provoquer le mouvement de rotation de l'arbre (21).
